# EUROPEAN PATENT SPECIFICATION

(11) **EP 1 634 192 B1**
(45) Date of publication and mention of the grant of the patent: **25.03.2020**
(21) Application number: 04734840.4
(22) Date of filing: 26.05.2004
(51) Int. Cl.: G06F 16/25

(54) **DATA PROCESSING SYSTEM AND METHOD FOR APPLICATION PROGRAMS IN A DATA WAREHOUSE**
VERFAHREN UND SYSTEM ZUR DATENVERARBEITUNG FÜR ANWENDUNGSPROGRAMME FÜR EIN DATENLAGER
MÉTHODE ET SYSTÈME DE TRAITEMENT DE DONNÉES POUR PROGRAMMES D'APPLICATION POUR UN ENTREPÔT DE DONNÉES

(30) Priority: 28.05.2003 EP 03012034
(43) Date of publication of application: 15.03.2006
(73) Proprietor: SAP SE, 69190 Walldorf (DE)
(72) Inventor: SCHMITT, Winfried, 69190 Walldorf (DE)
(74) Representative: Richardt Patentanwälte PartG mbB
(86) International application number: PCT/EP2004/005670
(87) International publication number: WO 2004/107205

(56) References cited:
- EP-A2- 1 195 694
- WO-A-00/19340
- US-A- 5 978 788
- US-A1- 2003 023 608
- US-B1- 6 408 292
- US-B1- 6 418 427

## Description

### Field of the invention.

The present invention pertains generally to computer-implemented databases and more particularly without limitation, to data warehouse computer systems and online analytical processing (OLAP).

### Background and prior art

Online analytical processing (OLAP) is a key part of most data warehouse and business analysis systems. OLAP services provide for fast analysis of multidimensional information. For this purpose, OLAP services provide for multidimensional access and navigation of data in an intuitive and natural way, providing a global view of data that can be drilled down into particular data of interest. Speed and response time are important attributes of OLAP services that allow users to browse and analyze data online in an efficient manner. Further, OLAP services typically provide analytical tools to rank, aggregate, and calculate lead and lag indicators for the data under analysis.

An OLAP cube is a multidimensional representation of a set of data. Such a cube is the basis for transaction data storage in prior art data warehouse systems.

The SAP® business information warehouse is a data warehouse system which enables to analyse data from operative SAP applications as well as other business applications and external data sources such as databases, online services and the Internet. The SAP business information warehouse enables OLAP for processing of information from large amounts of operative and historical data. In this context OLAP technology enables multi-dimensional analysis from various business perspectives.

The business information warehouse server for core areas and processes, pre-configured with business content, ensures that a user can look at information within the entire enterprise. In selected roles in a company, business content offers the information that employees need to carry out their tasks. As well as roles, business content contains other pre-configured objects such as cubes, queries, key figures and characteristics for simplification of business information warehouse implementation.

With the business explorer, the SAP business information warehouse provides flexible reporting and analysis tools for analysis and decision-making support. These tools include query, reporting and OLAP functions. An employee having access authorisation can evaluate past or current data on various levels of detail and from different perspectives, not only on the web but also in Microsoft Excel.

WO OO/19340 shows a multi-dimensional data management system. Multi-dimensional data is organised into classes which correspond to each of the dimensions that characterise the data. All relevant data is consolidated into a fact table which is based upon information of interest. The data within this table is linked to the top level of each class that corresponds to a different dimension of data, and sub-classes which exist within a given dimension of class automatically inherit the linked reference to the consolidated data. A user can thereby select search criteria within particular classes that correspond to dimensions of interest. This search criteria is then used to form a query which is applied to a relational database to obtain the desired results.

US Patent Number 5,978,788 shows a system and method for generating multi-representations of a data cube. The data cube is split into a plurality of dimensions. Representations are selected and the data cube is reconstructed.

US Patent Number 6,418, 427B1 shows a method for modifying dimension structures and relations in multi-dimensional processing.

US2003/0023608A1 shows a method for transforming a set of relations into multi-dimensional data cubes by means of a synthesis process.

EP1195694A2 shows a method for determining the variable dimensions of multi-dimensional database tables forming the representation of OLAP cubes.

It is a common disadvantage of prior art data processing systems that the assignment of data tables to be processed by application programs and the selection of the output format of the data processing is a tedious and error prone task which often involves a substantial amount of manual interaction. There is therefore a need for a data processing system and method that reduces the amount of user interaction.

### Summary of the invention

The present invention provides for a data processing method which enables the processing of database tables of a data warehouse by means of an application program. For example, each database table of a relational database of the data warehouse has a number of data entries, which are referred to as 'entities'. The entities of a given database table have the same entity type, i.e. 'account number', 'financial statement item', 'organisational unit', 'partner organisation', 'version', 'time', etc.

For example, there are database tables of the entity type 'accounts', which contain the account numbers of customers and vendors. Database tables of entity type 'organisational unit' can contain the legal entities of a company or the organisational units of the company from a business structure perspective.

At least one application program for processing of classes of the database tables is provided. A class of database tables contains database tables having a common entity type. This classification enables to perform the same data processing steps by the application program for different database tables provided that the database tables are within the same class.

For a given application program a sub-set of the database tables is assigned to the classes for access by the application program to the entities stored in the sub-set of these database tables. The assignment of database table to classes can be stored in a mapping table.

In accordance with a further preferred embodiment of the invention an OLAP component is provided. A user can select from a set of predefined OLAP cubes. The user needs to classify a selected OLAP cube in order to assign the selected OLAP cube to predefined OLAP cube classes. For example there are OLAP cube classes for performing different kinds of transactional data processing, such as "investment", "equity" , or "goodwill" transactional data processing.

In accordance with a further preferred embodiment of the invention a user can select an application program from a set of application programs. Each one of the application programs of the set of application programs requires database tables of one or more entity type classes and / or one or more OLAP cubes of specific OLAP cube classes. Both the entity type classes and the OLAP cube classes supported by the set of application programs are predefined.

When a user selects a database table as input data for the selected application the user needs to enter the name of a database table in a mapping table in order to assign the database table to one of the predefined entity type classes supported by the selected application. At least one database table needs to be selected and mapped by the user for each entity type class required as input data by the selected application.

The same applies analogously as far as the OLAP cube classes are concerned: When the user selects one of the OLAP cubes, the selected OLAP cube needs to be mapped to one of the predefined OLAP cube classes. This is done by entering the name of the given OLAP cube into a mapping table.

In accordance with a further preferred embodiment of the invention the mapping of database tables to entity type classes is a n:1 mapping, i.e. between one and n database tables can be mapped to the same entity type class. Database tables which are mapped to the same entity type class are merged for processing by the selected application. In contrast, the mapping of OLAP cubes to OLAP cube classes is a 1:1 mapping.

In accordance with a further preferred embodiment of the invention the OLAP cubes are loaded from internal or external data sources. Alternatively the OLAP cubes are computer generated or user defined.

The present invention is particularly advantageous as the amount of user interaction is substantially reduced. The user needs to assign data tables stored in the data warehouse to the pre-defined classes of data tables required by the various application programs by entering the respective assignments of data tables to data table types into the first mapping table. Also, the user needs to enter the assignment of OLAP cubes to the pre-defined OLAP cube classes required by the various application programs into a second mapping table.

After the mapping tables have been entered the following data processing can be performed fully automatically without requiring further user interaction. For example, if one of the application programs is invoked the data tables to be processed by that application program are accessed using the first mapping table and the result of the data processing is stored in the OLAP cube as determined by the second mapping table. This increases the user friendliness of the data processing system and makes the data processing more reliable as errors due to manual selection of database tables as input data can be avoided.

The invention is defined by the features of the independent claims. Further embodiments are the subject-matter of the dependent claims.

### Brief description of the drawings

In the following preferred embodiments of the invention will be described in greater detail by making reference to the drawings in which:
- Figure 1: is a block diagram of an embodiment of a data warehouse computer system of the invention,
- Figure 2: is illustrative of a flow diagram of an embodiment of a method of the invention,
- Figure 3: is a block diagram of an alternative preferred embodiment of a data warehouse computer system of the invention,
- Figure 4: is illustrative of an alternative embodiment of a method of the invention.

### Detailed description

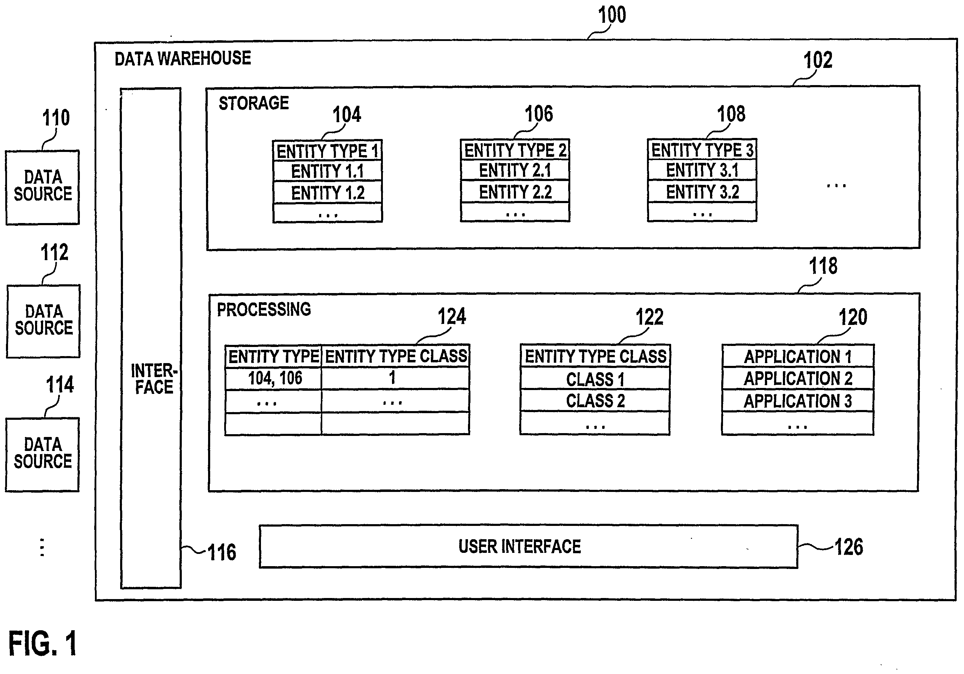

Figure 1 shows data warehouse computer system 100. Data warehouse computer system 100 has storage 102 for storing of a number of database tables 104, 106, 108, ...

Data from internal or external data sources 110, 112, 114, ... is extracted, transformed and loaded into data warehouse computer system 100 via interface 116. The imported data is stored in the database tables 104, 106, 108, ..., where each database table stores data of the same entity type. A data item of a certain entity type which is stored in one of the database tables 104, 106, 108, ... is referred to as 'entity' in the following.

In the example considered here database table 104 stores entities of entity type 1. For example entity type 1 is 'account numbers of customers'. In this instance entity 1.1 is the account number of customer A, entity 1.1. is the account number of customer B, etc.

Database table 106 stores data entities which have entity type 2. For example entity type 2 is 'account numbers of vendors'. In this instance entity 2.1 is the account number of vendor A, entity 2.2 is the account number of vendor B...

For instance, database table 108 has entity type 3 'legal entity' and stores the legal entities of a company. In this instance entity 3.1 is 'xy GmbH', entity 3.2 is 'xy Ltd', etc.

Processing component 118 of data warehouse computer system 100 has a set of application programs, 'application 1', 'application 2', 'application 3', ... Each application program of the set of application programs 120 has the purpose of performing a certain type of business orientated data processing, such as for the purposes of accounting, book keeping and/or consolidation.

Each one of the application programs of the set of application programs 120 is designed to process certain classes of database tables. For example application 1 is designed to process database tables containing account numbers and organisational entities whereas other application programs of the set of application programs 120 are designed for the processing of other classes of database tables. A definition of the classes of entity types of database tables supported by the set of application programs 120 is stored in list 122.

Mapping table 124 serves to assign one or more of the database tables 104, 106, 108, ... to classes. These assignments can be entered by a user via user interface 126.

In operation data is loaded into data warehouse computer system 100 from one or more of the data sources 110, 112, 114, ... via user interface 116 in order to store data entities of various entity types in corresponding ones of database tables 104, 106, 108, ...

A user can select one of the application programs of the set of application programs 120 via user interface 126. The selected one of the application programs of the set of application programs 120 requires certain classes of database tables as input data.

For example a user selects 'application 1' of the set of application programs 120 which requires database tables of entity type class 1 and entity type class 2 as input data. In order to enable access of the selected application program 'application 1' to the required database tables the user enters the names of one or more of the database tables 104, 106, 108, ... in mapping table 124 for each required class.

For example entity type 1 and entity type 2 of database tables 104 and 106 can be classified in 'class 1'. In this instance the user enters the name of database table 104 and/or the name of database table 106 in the left column of mapping table 124 for assignment to class 1.

It is important to note that the assignment of database tables to classes is a n:1 relationship, i.e. the user can assign one of the database tables 104, 106, 108, ... which is classified as 'class 1' by means of mapping table 124 or he or she can also assign two or more of the database tables falling in class 1 by means of mapping table 124. In the latter case the database tables being assigned to the same class are merged for processing by the selected application program, i.e. 'application 1'.

Entering of the mapping of database tables to classes can be facilitated by pull down or pop up menus listing the names of the database tables 104, 106, 108, ... which can be selected by the user for assignment to a certain class.

After the entry of mapping table 124 application 1 can start data processing by accessing of the class 1 and class 2 data tables as specified in mapping table 124.

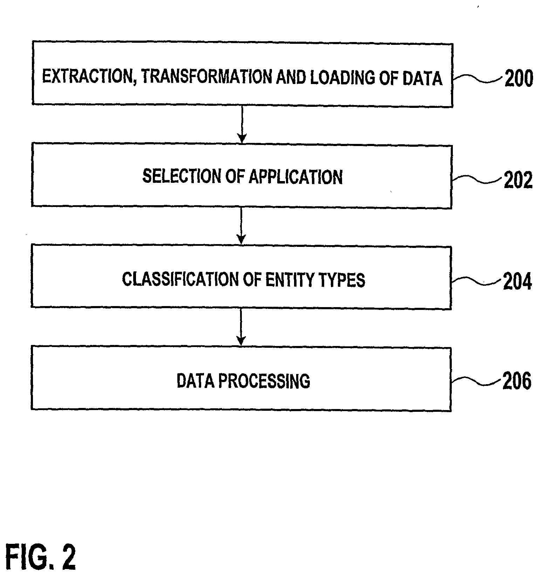

Figure 2 shows a corresponding flow chart. In step 200 data is extracted, transformed and loaded from internal or external data sources. In step 202 a user selects an application program from a set of application programs being implemented in the data warehouse computer system. The selected application program requires certain classes of database tables as input data.

Access to the input data is enabled by classification of database tables having certain entity types and selection of one or more of the classified database tables as input data for the selected application program. This is done in step 204. In step 206 data processing is performed by the selected application program on the basis of the input data as specified in the classification and selection step 204.

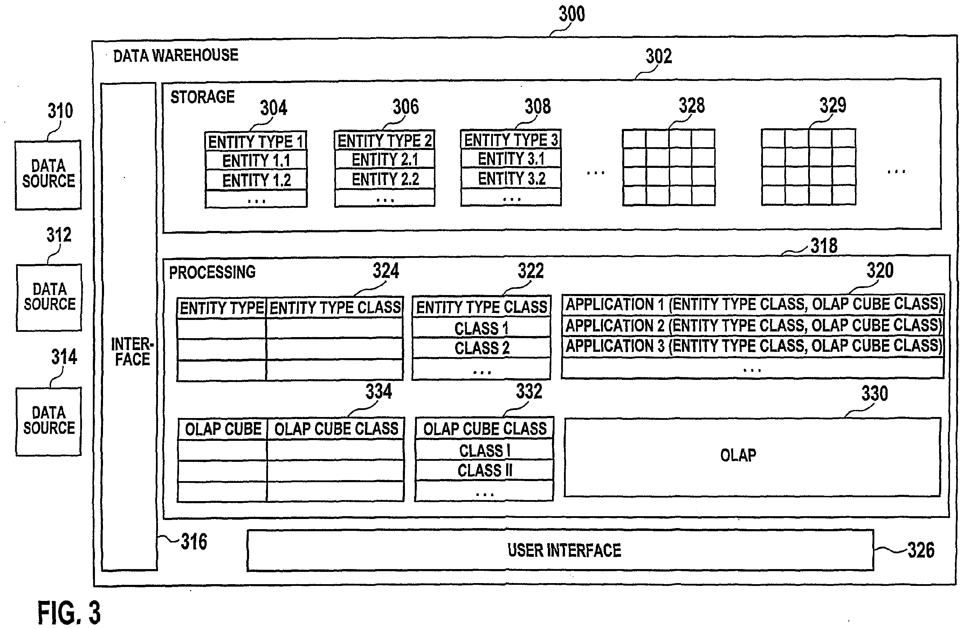

Figure 3 shows an alternative embodiment. Elements in the embodiment of figure 3 which correspond to elements of the embodiment of figure 1 are designated by like reference numerals having added 200.

In addition to the embodiment of figure 1, the data warehouse computer system 300 of figure 3 contains a set of OLAP cubes , i.e. OLAP cube 328, OLAP cube 329, ... The OLAP cubes 328, 329, ... are loaded from data sources 310, 312 or 314. Alternatively the OLAP cubes 328, 329, ... are generated by data warehouse computer system 300 or user defined. Further data warehouse computer system 300 has OLAP component 330.

Initially the OLAP cubes 328, 329, ... are empty and specify the layout for transaction data storage for various purposes. For example OLAP cube 328 specifies a transaction data storage of type "investment", whereas OLAP cube 329 specifies a transaction data storage of type "equity".

The set 320 of application programs has application programs "application 1", "application 2", "application 3", ... Each one of the application programs is designed for processing of database tables of specific ones of the entity type classes given in list 322. Likewise each one of the application programs of the set of application programs 320 is designed for performing of database processing steps on data contained in an OLAP cube of a certain class.

The classes of OLAP cubes which are supported by the application programs 320 are stored in list 332. List 332 contains a description of each one of the OLAP cube classes, i.e. class I, class II, ... For example class I contains OLAP cubes which are used for financial transactional data storage and processing whereas OLAP cube class II contains OLAP cubes which are used for real estate type transactional data storage and processing.

Mapping table 334 serves to map user selected ones of the OLAP cubes 328, 329, ... to OLAP cube classes I, II, ...

In operation the user selects one of the application programs of the set of application programs 320 via user interface 326. The selected one of the application programs 320 requires database tables of certain entity type classes and at least one OLAP cube of a certain OLAP cube class. Via user interface 326 the user is prompted to specify the mapping of database tables to the required entity type classes and the mapping of OLAP cubes to the required OLAP cube class.

For example the user has selected "application 1" from the set of application programs 320. Application 1 requires database tables of entity type class 1 and 2 and OLAP cube class I.

Next, the user selects database tables from storage 302 for assignment to the required entity type classes 1 or 2. This can be facilitated by pull down menus containing a list of the names of the available database tables 304, 306, 308, ...

Likewise the user is prompted to select one of the OLAP cubes 328, 329, ... for classification and mapping to the required class I. This mapping is entered in mapping table 334 which relates the user selected OLAP cube of the OLAP cubes 328, 329, ...to the required OLAP cube class, which is class I in the example considered here.

When the selected one of the application program 320 is started the input data is accessed in storage 302 by means of mapping table 324. Further the selected one of the application programs 320 invokes OLAP component 330 to generate transaction data for the OLAP cube as specified by the user in mapping table 334.

For example, if the user has selected OLAP cube 328 and classified this OLAP cube 328 as class I, this mapping is retrieved by the selected one of the application programs, i.e. application 1 from mapping table 334. By means of OLAP component 330 transaction data is stored in the OLAP cube 328 on the basis of the input data. In addition the selected one of the application programs performs certain data processing steps on the transactional data stored in the selected one of the OLAP cubes. Hence, the result of the data processing of the selected one of the applications is outputted and stored in the transaction data storage provided by the selected one of the OLAP cubes within storage 302.

This has the advantage that the selection of database tables as input parameters and the selection of OLAP cubes is simplified and is made more user friendly. Further this enables non-expert users to perform complex transactional data processing as the invention enables to integrate expert knowledge in the class definitions.

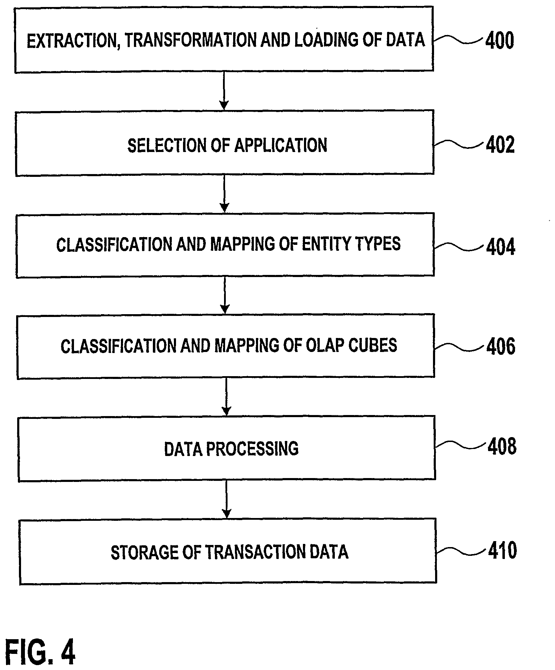

Figure 4 shows a corresponding flowchart. In step 400 data is extracted, transformed and loaded from internal and / or external data sources. In step 402 a user selects one of the application programs supported by data warehouse computer system. The selected one of the application programs requires certain classes of database tables and at least a certain class of OLAP cube as input data and input parameters, respectively. In step 404 database tables having certain entity types are assigned to the required classes by a user. This assignment of database tables to required classes is stored as a mapping table.

In step 406 an OLAP cube is selected by a user and classified in the required OLAP cube class. The corresponding mapping is stored as a further mapping table.

Now the selected one of the application programs can start data processing. In step 408 the selected application program invokes an OLAP component in order to fill the selected OLAP cube with transactional data. This is performed on the basis of the input data provided by the selected database tables. The transactional data contained in the OLAP cube is further processed by the selected one of the application programs. The result of the data processing operation is stored as transactional data in the OLAP cube. In step 410 the transactional data is visualized on the user interface and stored for later reference.

### List of Reference Numerals

- 100: data warehouse computer system
- 102: Storage
- 104: database table
- 106: database table
- 108: database table
- 110: data source
- 112: data source
- 114: data source
- 116: Interface
- 118: processing component
- 120: application programs
- 122: List
- 124: mapping table
- 126: user interface
- 300: data warehouse computer system
- 302: Storage
- 304: database table
- 306: database table
- 308: database table
- 310: data source
- 312: data source
- 314: data source
- 316: Interface
- 318: processing component
- 320: application programs
- 322: List
- 324: mapping table
- 326: user interface
- 328: OLAP
- 329: OLAP cube
- 330: OLAP component
- 332: list
- 334: mapping table

## Claims

1. A data processing system comprising:
- a relational database (102;302) of a data warehouse (100;300) for storing of a set of database tables (104,106,108,...; 304, 306, 308, ...),
- a set of online analytical processing cubes (328,329, ...),
- an online analytical processing component (330)
- a set of application programs (320), each application program operable for processing one or more pre-defined classes of database tables and for storage of the result of the processing in an online analytical processing cube of a pre-defined class of online analytical processing cubes using the online analytical processing component,
- a first mapping table (124; 324) for mapping of sub-sets of the set of database tables to the pre-defined classes of database tables,
- a second mapping table (334) for mapping online analytical processing cubes of the set of online analytical processing cubes to the pre-defined classes of online analytical processing cubes,
- interface means (326) for a user's selection of one of the application programs of the set of application programs, the interface means adapted to allow the user to specify the mappings of the first mapping table and mappings of the second mapping table, and
- processing means (118) for execution of the selected one of the application programs by reading the database tables that are assigned to the pre-defined classes of database tables of the selected one of the application programs in the first mapping table and storing the result of the processing in one of the online analytical processing cubes of the set of online analytical processing cubes that is assigned to the pre-defined class of online analytical processing cubes by the second mapping table.

2. The data processing system of claim 1, the user interface means (326) being adapted for entering the first and second mapping tables.

3. The data processing system of claim 1 or 2, further comprising an interface (116; 316) for extracting, transforming and loading data from internal or external data sources (110, 112, 114; 310, 312, 314) into the relational database.

4. A data processing method of comprising the steps of:
- providing a set of database tables in a data warehouse,
- providing a set of online analytical processing cubes (328,329, ...),
- providing an online analytical processing component (330),
- providing a set of application programs, each application program for processing one or more pre-defined classes of database tables and for storing of the result of the processing in an online analytical processing cube of a pre-defined class of online analytical processing cubes using an online analytical processing component,
- receiving user assignment of at least one of the database tables to each one of the classes of database tables of the application program in a first mapping table,
- receiving user assignment of online analytical processing cubes of the set of online analytical processing cubes to the classes of online analytical processing cubes in a second mapping table,
- processing data items stored in the assigned database tables by the application program, and
- storing the result of the processing in one of the online analytical processing cubes of the set of online analytical processing cubes that is assigned to the pre-defined class of online analytical processing cubes by the second mapping table.

5. The method of claim 4, whereby a set of application programs is provided, whereby each application program of the set of application programs is adapted to process a set of classes of database tables.

6. The method of claim 5, further comprising storage of multi-dimensional transactional data resulting from the data processing.

7. A computer program product for implementing the data processing method of any of claims 4, 5 or 6.

## Patentansprüche

1. Datenverarbeitungsverfahren, das Folgendes aufweist:
- eine relationale Datenbank (102; 302) eines Datenlagers (100; 300) zum Speichern eines Satzes von Datenbanktabellen (104, 106, 108, ...; 304, 306, 308, ...),
- einen Satz von Würfeln der online-analytischen Verarbeitung (328, 329, ...),
- eine Komponente der online-analytischen Verarbeitung (330),
- einen Satz von Anwendungsprogrammen (320), wobei jedes Anwendungsprogramm zur Verarbeitung von ein oder mehr vordefinierten Klassen von Datenbanktabellen und zur Speicherung des Ergebnisses der Verarbeitung in einem Würfel der online-analytischen Verarbeitung einer vordefinierten Klasse von Würfeln der online-analytischen Verarbeitung unter Verwendung der Komponente der online-analytischen Verarbeitung funktionell ist,
- eine erste Zuordnungstabelle (124; 324) zum Zuordnen von Teilsätzen des Satzes von Datenbanktabellen zu den vordefinierten Klassen von Datenbanktabellen,
- eine zweite Zuordnungstabelle (334) zum Zuordnen von Würfeln der online-analytischen Verarbeitung des Satzes von Würfeln der online-analytischen Verarbeitung zu den vordefinierten Klassen von Würfeln der online-analytischen Verarbeitung,
- ein Schnittstellenmittel (326) für die Benutzerauswahl von einem der Anwendungsprogramme des Satzes von Anwendungsprogrammen, wobei das Schnittstellenmittel zum Zulassen für den Benutzer, die Zuordnungen der ersten Zuordnungstabelle und die Zuordnungen der zweiten Zuordnungstabelle geeignet ist, und
- ein Verarbeitungsmittel (118) zur Ausführung des ausgewählten der Anwendungsprogramme durch Lesen der Datenbanktabellen, die den vordefinierten Klassen von Datenbanktabellen des ausgewählten der Anwendungsprogramme in der ersten Zuordnungstabelle zugewiesen sind, und Speichern des Ergebnisses der Verarbeitung in einem der Würfel der online-analytischen Verarbeitung des Satzes von Würfeln der online-analytischen Verarbeitung, der der vordefinierten Klasse von Würfeln der online-analytischen Verarbeitung durch die zweite Zuordnungstabelle zugewiesen wird.

2. Datenverarbeitungssystem nach Anspruch 1, wobei das Benutzerschnittstellenmittel (326) zum Eingeben der ersten und der zweiten Zuordnungstabelle geeignet ist.

3. Datenverarbeitungssystem nach Anspruch 1 oder 2, das ferner eine Schnittstelle (116; 316) zum Extrahieren, Umwandeln und Laden von Daten aus internen oder externen Datenquellen (110, 112, 114; 310, 312, 314) in die relationale Datenbank aufweist.

4. Datenverarbeitungsverfahren, das die folgenden Schritte aufweist:
- Bereitstellen eines Satzes von Datenbanktabellen in einem Datenlager,
- Bereitstellen eines Satzes von Würfeln der online-analytischen Verarbeitung (328, 329, ...),
- Bereitstellen einer Komponente der online-analytischen Verarbeitung (330),
- Bereitstellen eines Satzes von Anwendungsprogrammen, wobei jedes Anwendungsprogramm zum Verarbeitung von ein oder mehr vordefinierten Klassen von Datenbanktabellen und zum Speichern des Ergebnisses der Verarbeitung in einem Würfel der online-analytischen Verarbeitung einer vordefinierten Klasse von Würfeln der online-analytischen Verarbeitung unter Verwendung einer Komponente der online-analytischen Verarbeitung ist,
- Empfangen einer Benutzerzuweisung von wenigstens einer der Datenbanktabellen zu jeder der Klassen von Datenbanktabellen des Anwendungsprogramms in einer ersten Zuordnungstabelle,
- Empfangen einer Benutzerzuweisung von Würfeln der online-analytischen Verarbeitung des Satzes von Würfeln der online-analytischen Verarbeitung zu den Klassen von Würfeln der online-analytischen Verarbeitung in einer zweiten Zuordnungstabelle,
- Verarbeiten von in den zugewiesenen Datenbanktabellen gespeicherten Datenelementen durch das Anwendungsprogramm und
- Speichern des Ergebnisses der Verarbeitung in einem der Würfel der online-analytischen Verarbeitung des Satzes von Würfeln der online-analytischen Verarbeitung, der der vordefinierten Klasse von Würfeln der online-analytischen Verarbeitung durch die zweite Zuordnungstabelle zugewiesen wird.

5. Verfahren nach Anspruch 4, wobei ein Satz von Anwendungsprogrammen bereitgestellt ist, wobei jedes Anwendungsprogramm des Satzes von Anwendungsprogrammen zur Verarbeitung eines Satzes von Datenbanktabellenklassen geeignet ist.

6. Verfahren nach Anspruch 5, das ferner die Speicherung von sich aus der Datenverarbeitung ergebenden, mehrdimensionalen transaktionalen Daten aufweist.

7. Computerprogrammprodukt zum Implementieren des Datenverarbeitungsverfahrens nach einem der Ansprüche 4, 5 oder 6.

## Revendications

1. Système de traitement de données comprenant :
- une base de données relationnelle (102 ; 302) d'un entrepôt de données (100 ; 300) pour le stockage d'un ensemble de tableaux de base de données (104, 106, 108, ... ; 304, 306, 308, ...),
- un ensemble de cubes de traitement analytique en ligne (328, 329, ...),
- un composant de traitement analytique en ligne (330)
- un ensemble de programmes d'application (320), chaque programme d'application étant opérationnel pour le traitement d'une ou de plusieurs classes prédéfinies de tableaux de base de données et pour le stockage du résultat du traitement dans un cube de traitement analytique en ligne d'une classe prédéfinie de cubes de traitement analytique en ligne en utilisant le composant de traitement analytique en ligne,
- un premier tableau de correspondance (124 ; 324) pour la mise en correspondance de sous-ensembles de l'ensemble de tableaux de base de données avec les classes prédéfinies de tableaux de base de données,
- un deuxième tableau de correspondance (334) pour la mise en correspondance de cubes de traitement analytique en ligne de l'ensemble de cubes de traitement analytique en ligne avec les classes prédéfinies de cubes de traitement analytique en ligne,
- des systèmes d'interface (326) pour une sélection d'utilisateur de l'un des programmes d'application de l'ensemble de programmes d'application, les systèmes d'interface étant appropriés pour permettre à l'utilisateur de spécifier les mises en correspondance du premier tableau de correspondance et les mises en correspondance du deuxième tableau de correspondance, et
- des systèmes de traitement (118) pour l'exécution du programme choisi parmi les programmes d'application par la lecture des tableaux de base de données qui sont associés aux classes prédéfinies de tableaux de base de données du programme sélectionné parmi le programmes d'application dans le premier tableau de correspondance et pour stocker le résultat du traitement dans l'un des cubes de traitement analytique en ligne de l'ensemble de cubes de traitement analytique en ligne qui est associé à la classe prédéfinie de cubes de traitement analytique en ligne par le deuxième tableau de correspondance.

2. Système de traitement de données selon la revendication 1, les systèmes d'interface (326) d'utilisateur étant appropriés pour entrer dans les premier et deuxième tableaux de correspondance.

3. Système de traitement de données selon la revendication 1 ou la revendication 2, comprenant en outre une interface (116 ; 316) pour l'extraction, la transformation et le chargement de données à partir de sources de données internes ou externes (110, 112, 114 ; 310, 312, 314) dans la base de données relationnelle.

4. Procédé de traitement de données comprenant les étapes :
- de mise en place d'un ensemble de tableaux de base de données dans un entrepôt de données,
- de mise en place d'un ensemble de cubes de traitement analytique en ligne (328, 329, ...),
- de mise en place d'un composant de traitement analytique en ligne (330),
- de mise en place d'un ensemble de programmes d'application, chaque programme d'application étant prévu pour le traitement d'une ou de plusieurs classes prédéfinies de tableaux de base de données et pour le stockage du résultat du traitement dans un cube de traitement analytique en ligne d'une classe prédéfinie de cubes de traitement analytique en ligne en utilisant le composant de traitement analytique en ligne,
- de réception d'une association d'utilisateur d'au moins un des tableaux de base de données à chacune des classes de tableaux de données du programme d'application dans un premier tableau de correspondance,
- de réception d'une association d'utilisateur de cubes de traitement analytique en ligne de l'ensemble de cubes de traitement analytique en ligne aux classes de cubes de traitement analytique en ligne dans un deuxième tableau de correspondance,
- de traitements d'éléments de données stockés dans les tableaux de base de données associés par le programme d'application, et
- de stockage du résultat du traitement dans l'un des cubes de traitement analytique en ligne de l'ensemble de cubes de traitement analytique en ligne qui est associé à la classe prédéfinie de cubes de traitement analytique en ligne par le deuxième tableau de correspondance.

5. Procédé selon la revendication 4, par lequel un ensemble de programmes d'application est mis en place, par lequel chaque programme d'application de l'ensemble de programmes d'application est approprié pour traiter un ensemble de classes de tableaux de base de données.

6. Procédé selon la revendication 5, comprenant en outre le stockage de données de transactions multidimensionnelles résultant du traitement de données.

7. Produit-programme informatique pour la mise en œuvre du procédé de traitement de données selon l'une quelconque des revendications 4, 5 ou 6.
